# EUROPEAN PATENT SPECIFICATION

(11) **EP 4 525 070 B1**
(45) Date of publication and mention of the grant of the patent: **25.11.2026**
(21) Application number: 23855955.3
(22) Date of filing: 06.01.2023
(51) Int. Cl.: H01M 4/133, H01M 4/36, H01M 4/587, H01M 10/054, H01M 4/02, H01M 4/62

(54) **NEGATIVE ELECTRODE SHEET, SECONDARY BATTERY, AND ELECTRICAL DEVICE**
NEGATIVELEKTRODENFOLIE, SEKUNDÄRBATTERIE UND ELEKTRISCHE VORRICHTUNG
FEUILLE D'ÉLECTRODE NÉGATIVE, BATTERIE SECONDAIRE ET DISPOSITIF ÉLECTRIQUE

(30) Priority: 26.08.2022 CN 202211033942
(43) Date of publication of application: 19.03.2025
(73) Proprietor: Sunwoda Mobility Energy Technology Co., Ltd., Shenzhen, Guangdong 518107 (CN)
(72) Inventor: JU, Xiaokang, Shenzhen, Guangdong 518107 (CN); HU, Meng, Shenzhen, Guangdong 518107 (CN); ZHANG, Yao, Shenzhen, Guangdong 518107 (CN)
(74) Representative: Ostriga PartGmbB
(86) International application number: PCT/CN2023/071003
(87) International publication number: WO 2024/040858

(56) References cited:
- CN-A- 101 159 324
- CN-A- 103 633 293
- CN-A- 114 303 257
- CN-A- 114 735 672
- CN-A- 114 735 672
- CN-A- 115 472 777
- JP-A- 2013 137 907
- US-A1- 2012 052 393
- US-A1- 2016 322 636

## Description

### TECHNICAL FIELD

The present invention relates to the technical field of energy storage, and in particular, to a negative electrode sheet, a secondary battery and an electrical device.

### BACKGROUND

In the field of sodium ion batteries, hard carbon is mostly used as a negative electrode active material. However, an Initial Coulombic efficiency (ICE) of hard carbon electrodes is generally insufficient, which seriously damages cycling stability of the sodium ion batteries. In order to further enhance utilization potentiality of hard carbon negative electrodes in the field of the sodium-ion batteries, their ICE must be optimized.

CN 11473 5672 A discloses a boron-nitrogen co-doped hard carbon material for use as a negative electrode in lithium/sodium-ion batteries. This application indicates that appropriate amounts of B-N co-doping may reduce the interlayer spacing of hard carbon materials, enhance the closed-pore degree of the internal pore structure, and contribute to increasing the discharge capacity of lithium/sodium-ion batteries.

CN 114303257 A discloses a negative electrode comprising: a negative electrode active material layer comprising negative electrode active material particles, which comprise a pore portion and a non-porous portion, wherein the non-porous portion comprises a heteroatom; the heteroatom includes at least one element selected from boron, nitrogen, fluorine, phosphorus, or sulfur.

US 2016322636 A1 discloses a negative electrode active material comprising a low crystalline artificial graphite and an amorphous carbon coating layer formed on the low crystalline artificial graphite, wherein an interplanar spacing d₀₀₂ of (002) plane is in a range of greater than 0.338 nm to less than 0.3396 nm, as measured by X-ray diffraction (XRD). When the negative electrode active material is used for lithium secondary batteries, a more stable SEI layer can be formed during reacting with an electrolyte solution, thereby improving initial efficiency and reversible capacity of the lithium secondary battery.

US 2012052393 A1 discloses a negative electrode material for a nonaqueous electrolyte secondary battery, where the negative electrode contains a carbon material A and a carbon material B. Carbon material A is a multilayer-structure carbon material containing a graphitic particle having an amorphous carbon surface covering, where the interplanar spacing of 002 planes, by wide-angle XRD, is 0.337 nm (3.37 Å) or less, Lc is 90 nm (900 Å) or more, the tap density is 0.8 g/cm² or more, and the Raman R value is from 0.25 to 0.6. Carbon material B is a graphitic particle where the interplanar spacing of 002 planes, by wide-angle XRD, is 0.337 nm or less, Lc is 90 nm or more, the tap density is 0.8 g/cm² or more, the Raman R value is from 0.2 to 0.5, and the average degree of circularity, determined by a flow-type particle analyzer, is 0.9 or more.

Therefore, it is necessary to provide a negative electrode sheet so that the sodium ion battery has a higher capacity and a higher ICE.

### SUMMARY

The present invention aims to solve at least one of the technical problems existing in the existing technology. To this end, a first aspect of the present invention provides a negative electrode sheet that can effectively improve an initial coulombic efficiency (ICE) and a battery capacity.

The invention is set out in the appended set of claims.

A second aspect of the present invention further provides a secondary battery.

A third aspect of the present invention further provides an electrical device.

An embodiment of the first aspect of the present invention provides a negative electrode sheet. The negative electrode sheet includes a negative electrode current collector and a negative electrode active layer disposed on at least one side of the negative electrode current collector, the negative electrode active layer includes a first active layer and a second active layer; the first active layer is located between the second active layer and the negative electrode current collector;
the first active layer includes a first negative electrode active material, and the second active layer includes a second negative electrode active material;
an interplanar spacing d1 of (002) crystal planes of the first negative electrode active material is greater than an interplanar spacing d2 of (002) crystal planes of the second negative electrode active material.

The negative electrode sheet according to the embodiment of the present invention has at least the following beneficial effects:
According to the present invention, the negative electrode sheet can improve the ICE of sodium ion batteries and keep a relatively high battery capacity by defining the interplanar spacing d1 of (002) crystal planes of the first negative electrode active material being greater than the interplanar spacing d2 of (002) crystal planes of the second negative electrode active material. This is because the function of the first active layer is to provide more sodium storage capacity and increase battery capacity; and the function of the second active layer is to reduce side reactions with an electrolyte, thereby improving the ICE.

The interplanar spacing d1 of (002) crystal planes of the first negative electrode active material and the interplanar spacing d2 of (002) crystal planes of the second negative electrode active material satisfy: d1/d2≤1.2. As a result, the first active layer and the second active layer have better compatibility. If there is a great difference between the interplanar spacings, stress changes will be greatly different during a charge and discharge process (the interplanar spacing will affect volume expansion during sodium ion insertion, and there is great difference between the volume expansions if there is a great difference between the interplanar spacings), resulting in poor compatibility between the first active layer and the second active layer, and easy peeling of the second active layer.

According to some embodiments of the present invention, the interplanar spacing d1 of (002) crystal planes of the first negative electrode active material satisfies 0.377 nm≤d1≤0.398 nm (3.77 Å≤d1≤3.98 Å). According to some embodiments of the present invention, the interplanar spacing d1 of (002) crystal planes of the first negative electrode active material is 0.377 nm (3.77 Å), 0.390 nm (3.90 Å), 0.398 nm (3.98 Å), or within a range consisted of any two of the above values.

According to some embodiments of the present invention, the interplanar spacing d2 of (002) crystal planes of the second negative electrode active material satisfies 0.332 nm≤d2≤0.383 nm (3.32 Å≤d2≤3.83 Å). According to some embodiments of the present invention, the interplanar spacing d2 of (002) crystal planes of the second negative electrode active material is 0.332 nm (3.32 Å), 0.355 nm (3.55 Å), 0.365 nm (3.65 Å), 0.373 nm (3.73 Å), 0.375 nm (3.75 Å), 0.383 nm (3.83 Å) or a range consisted of any two of the above values.

The interplanar spacing is characterized by a transmission electron microscope.

The first negative electrode active material and the second negative electrode active material each independently include heteroatoms, and the heteroatoms include at least two of nitrogen, oxygen, sulfur, or boron.

A content of the heteroatoms in the first negative electrode active material is greater than that in the second negative electrode active material.

According to some embodiments of the present invention, the content of the heteroatoms is tested by an inductively coupled plasma optical emission spectrometer (ICP-OES) or a scanning electron microscope-energy dispersive spectrometer (SEM-EDS).

According to some embodiments of the present invention, a compacted density of the negative electrode sheet is 1.1 g/cm³ to 1.7 g/cm³. According to some embodiments of the present invention, the compacted density of the negative electrode sheet is 1.3 g/cm³ to 1.5 g/cm³. According to some embodiments of the present invention, the compacted density of the negative electrode sheet is 1.1 g/cm³, 1.3 g/cm³, 1.5 g/cm³, 1.7 g/cm³ or within a range consisted of any two of the above values. As a result, the negative electrode sheet has a great ICE and dynamic performance.

According to some embodiments of the present invention, the first active layer further includes a first conductive agent, a first binder and a first dispersant; and the second active layer further includes a second conductive agent, a second binder and a second dispersant.

According to some embodiments of the present invention, calculated in terms of a total mass of the first active layer, the first active layer includes the following components in mass percentage:

| | |
|---|---|
| the first negative electrode active material | 65% to 99.85%; |
| the first conductive agent | 0.05% to 15%; |
| the first binder | 0.05% to 15%; |
| the first dispersant | 0.05% to 5%. |

According to some embodiments of the present invention, calculated in terms of the total mass of the second active layer, the second active layer includes the following components in mass percentage:

| | |
|---|---|
| the second negative electrode active material | 65% to 99.85%; |
| the second conductive agent | 0.05% to 15%; |
| the second binder | 0.05% to 15%; |
| the second dispersant | 0.05% to 5%. |

The first negative electrode active material and the second negative electrode active material each include at least one of hard carbon, soft carbon, and mesocarbon microspheres.

According to some embodiments of the present invention, the first binder and the second binder each independently include at least one of polyvinylidene fluoride, polyvinyl alcohol, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene monomer (EPDM), styrene-butadiene rubber and fluorine rubber.

According to some embodiments of the present invention, the first conductive agent and the second conductive agent are independently selected from at least one of conductive carbon black, acetylene black, Ketjen black, conductive graphite, conductive carbon fiber, carbon nanotubes, metal powder or carbon fiber.

According to some embodiments of the present invention, the first dispersant and the second dispersant are independently selected from at least one of sodium carboxymethyl cellulose (CMC-Na) or lithium carboxymethylcellulose.

According to some embodiments of the present invention, the negative electrode current collector includes at least one of copper foil, aluminum foil, copper mesh, aluminum mesh, aluminum foil coated with a conductive carbon layer, copper foil coated with a conductive carbon layer, a polymer film coated with aluminum, a polymer film coated with copper, a conductive polymer film, or a conductive film having corrosion stability when used in an electrolyte system.

According to some embodiments of the present invention, a preparation method of the negative electrode sheet includes the following steps:
S1. stirring the first negative electrode active material, the first conductive agent, the first binder and the first dispersant to obtain the first active layer; stirring the second negative electrode active material, the second conductive agent, the second binder and the second dispersant to obtain the second active layer; and
S2. coating upper and lower surfaces of the current collector by a double-layer coating method, drying and rolling the coated upper and lower surfaces to obtain the negative electrode sheet.

An embodiment of the second aspect of the present invention provides a secondary battery, which includes a positive electrode sheet, an electrolyte, a diaphragm, and a negative electrode sheet as described above. The diaphragm is disposed between the positive electrode sheet and the negative electrode sheet. The electrolyte is filled between the positive electrode sheet and the negative electrode sheet and infiltrates the diaphragm.

The secondary battery of the present invention includes the negative electrode sheet of a possible embodiment of the first aspect of the present invention, where the negative electrode sheet of the first aspect of the present invention can effectively improve the capacity and ICE of the sodium-ion battery. Therefore, the secondary battery provided by the present invention has a higher battery capacity and ICE.

According to some embodiments of the present invention, the positive electrode sheet includes a positive electrode current collector and a positive electrode active material layer formed on a surface of the positive electrode current collector. The positive electrode active material layer includes a positive electrode active material, and the positive electrode active material includes at least one of a sodium transition metal oxide, a polyanionic compound, or a Prussian blue compound.

According to some embodiments of the present invention, in the sodium transition metal oxide, the transition metal can be at least one of Mn, Fe, Ni, Co, Cr, Cu, Ti, Zn, V, Zr and Ce. The sodium transition metal oxide is, for example, NaₓMO₂, where M is one or more of Ti, V, Mn, Co, Ni, Fe, Cr and Cu, and 0<x≤1.

According to some embodiments of the present invention, the polyanionic compound can be a class of compounds having sodium ions, transition metal ions, and tetrahedral (YO₄) ⁿ⁻ anion units. The transition metal can be at least one of Mn, Fe, Ni, Co, Cr, Cu, Ti, Zn, V, Zr and Ce; Y can be at least one of P, S and Si; and n represents a valence state of (YO₄)ⁿ⁻.

The polyanionic compound can also be a class of compounds having sodium ions, transition metal ions, tetrahedral (YO₄)ⁿ⁻ anion units and halogen anions. The transition metal can be at least one of Mn, Fe, Ni, Co, Cr, Cu, Ti, Zn, V, Zr and Ce; Y can be at least one of P, S and Si, n represents the valence state of (YO₄)ⁿ⁻; and the halogen can be at least one of F, Cl and Br.

The polyanionic compound can also be a class of compounds having sodium ions, tetrahedral (YO₄)ⁿ⁻ anionic units, polyhedral units (ZO_{y})^{m+}, and optional halogen anions. Y can be at least one of P, S and Si, n represents the valence state of (YO₄)ⁿ⁻; Z represents a transition metal, which can be at least one of Mn, Fe, Ni, Co, Cr, Cu, Ti, Zn, V, Zr and Ce, m represents the valence state of (ZO_{y})^{m+}; and the halogen can be at least one of F, Cl and Br.

The polyanionic compound is, for example, at least one of NaFePO₄, Na₃V₂(PO₄)₃, NaM'PO₄F (M' is one or more of V, Fe, Mn and Ni) and Na₃(VO_{y})₂(PO₄)₂F_{3-2y} (0 ≤y≤1).

The Prussian blue compound can be a class of compounds having sodium ions, transition metal ions and cyanide ions (CN). The transition metal can be at least one of Mn, Fe, Ni, Co, Cr, Cu, Ti, Zn, V, Zr and Ce. The Prussian blue compound is, for example, NaₐMe_{b}Me'_{c}(CN)₆, where Me and Me' are each independently at least one of Ni, Cu, Fe, Mn, Co and Zn, and 0<a≤2, 0<b< 1, 0<c<1.

According to some embodiments of the present invention, the positive electrode active material layer can further include a conductive agent to improve conductive performance of the positive electrode. The present invention does not specifically define the type of conductive agent, which can be selected according to actual needs. As an example, the conductive agent can be one or more of superconducting carbon, acetylene black, carbon black, Ketjen black, carbon dots, carbon nanotubes, graphite, graphene or carbon nanofibers.

According to some embodiments of the present invention, the positive electrode active material layer can further include a binder to firmly bond the positive electrode active material and the optional conductive agent to the positive electrode current collector. The present invention does not specifically define the type of the binder, which can be selected according to actual needs. As an example, the binder can be at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene-butadiene rubber (SBR), carboxymethyl cellulose (CMC), sodium alginate (SA), polymethacrylic acid (PMA) or carboxymethyl chitosan (CMCS).

According to some embodiments of the present invention, the positive electrode current collector adopts conductive carbon sheets, metal foils, carbon-coated metal foils, porous metal plates or composite current collectors, where a conductive carbon material of the conductive carbon sheets can be one or more of superconducting carbon, acetylene black, carbon black, Ketjen black, carbon dots, carbon nanotubes, graphite, graphene or carbon nanofibers. Metal materials of the metal foils, the carbon-coated metal foils and the porous metal plates can be each independently selected from at least one of copper, aluminum, nickel and stainless steel. The composite current collector can be a composite current collector formed by compounding a metal foil material and a polymer base film.

According to some embodiments of the present invention, the diaphragm can be made of various materials suitable for secondary battery diaphragms in the art, for example, including but not limited to at least one of polyethylene, polypropylene, polyvinylidene fluoride, aramid, polyethylene terephthalate, polytetrafluoroethylene, polyacrylonitrile, polyimide, polyamide, polyester and natural fibers.

According to some embodiments of the present invention, the electrolyte includes an organic solvent and an electrolyte sodium salt. For example, the organic solvent includes one or more of ethylene carbonate, propylene carbonate, diethyl carbonate, dimethyl carbonate, methyl ethyl carbonate, propylene carbonate, methyl acetate, ethyl propionate, fluoroethylene carbonate, ether, diethylene glycol dimethyl ether, triethylene glycol dimethyl ether, tetraethylene glycol dimethyl ether, and methyl tert-butyl ether; and the electrolyte sodium salt includes one or more of sodium hexafluorophosphate, sodium bis(fluorosulfonl)imide, sodium bis(trifluoromethanesulfonyl)imide, sodium trifluoromethanesulfonate, sodium tetrafluoroborate, sodium difluorophosphate, sodium perchlorate and sodium chloride.

An embodiment of the third aspect of the present invention provides an electrical device, which includes the above-mentioned secondary battery.

Additional features and advantages of the present invention will be set forth in the description which follows, and in part will be apparent from the description, or can be learned by implementation of the present invention.

### BRIEF DESCRIPTION OF DRAWINGS

The above and/or additional aspects and advantages of the present invention will become apparent and readily understood from the description of the embodiments taken in conjunction with the following drawings, in which:

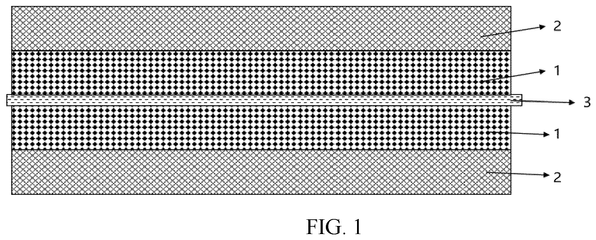

FIG. 1 is a schematic diagram of a negative electrode sheet of Example 1;
where 1 represents first active layer; 2 represents second active layer, and 3 represents negative electrode current collector.

### DETAILED DESCRIPTION

The following are specific embodiments of the present invention, and the technical solutions of the present invention are further described in conjunction with the embodiments, but the present invention is not limited to these embodiments.

The reagents, methods and devices used in the present invention are all conventional reagents, methods and devices in this technical field unless otherwise specified.

The raw materials used in the examples and comparative examples are as follows:
First negative electrode active material A: hard carbon (with a capacity per gram of 450 mAh/g and a proportion of each heteroatom N: 5%, S: 2.5%, P: 1%, B: 0.5%, a total proportion of 9%); and d1 is 0.398 nm (3.98Å).

First negative electrode active material B: hard carbon (with a capacity per gram of 400 mAh/g and a proportion of each heteroatom N: 2.5%, S: 1.5%, P: 0.5%, B: 0.5%, a total proportion of 5%); and d1 is 0.377 nm (3.77Å).

First negative electrode active material C: hard carbon (with a capacity per gram of 420 mAh/g and a proportion of each heteroatom N: 3.5%, S: 2%, P: 1%, B: 0.5%, a total proportion of 7%); and d1 is 0.39 nm (3.9Å).

First negative electrode active material D: hard carbon (with a capacity per gram of 500 mAh/g and a proportion of each heteroatom N: 6%, S:2.5%, P: 1.5%, B:1%, a total proportion of 11%); and d1 is 0.403 nm (4.03Å).

Second negative electrode active material A: hard carbon (with a capacity per gram of 360 mAh/g and a proportion of each heteroatom N: 3%, S:1%, P: 0.5%, B:0.5%, a total proportion of 5%); and d2 is 0.383 nm (3.83Å).

Second negative electrode active material B: hard carbon (with a capacity per gram of 220 mAh/g and a proportion of each heteroatom N: 0.75%, S:0.25%, P: 0%, B:0%, a total proportion of 1%); and d2 is 0.332 nm (3.32 Å).

Second negative electrode active material C: hard carbon (with a capacity per gram of 350 mAh/g and a proportion of each heteroatom N: 3%, S:1%, P: 0.5%, B:0%, a total proportion of 4.5%); and d2 is 0.375 nm (3.75 Å).

Second negative electrode active material D: hard carbon (with a capacity per gram of 345 mAh/g and a proportion of each heteroatom N: 3%, S:1%, P: 0%, B:0.5%, a total proportion of 4.5%); and d2 is 0.373 nm (3.73 Å).

Second negative electrode active material E: hard carbon (with a capacity per gram of 343 mAh/g and a proportion of each heteroatom N: 3%, S:0.5%, P: 0.5%, B:0.5%, a total proportion of 4.5%); and d2 is 0.365 nm (3.65 Å).

Second negative electrode active material F: hard carbon (with a capacity per gram of 342 mAh/g and a proportion of each heteroatom N: 2.5%, S:1%, P: 0.5%, B:0.5%, a total proportion of 4.5%); and d2 is 0.355 nm (3.55 Å).

### Embodiment 1 (Embodiment 1 is provided as a comparative example and is not covered by claim 1)

Embodiment 1 provides a negative electrode sheet. FIG. 1 is a schematic structural diagram of the negative electrode sheet of Embodiment 1; where, 1 represents a first active layer; 2 represents a second active layer, and 3 represents a negative electrode current collector. A preparation method of the negative electrode sheet is as follows:
S1. 94% of the first negative electrode active material A, 3% of conductive carbon black, 1.5% of styrene-butadiene rubber and 1.5% of sodium carboxymethyl cellulose are dissolved in deionized water and stirred to obtain a first active layer slurry; 94% of the second negative electrode active material A, 3% of conductive carbon black, 1.5% of styrene-butadiene rubber and 1.5% of sodium carboxymethyl cellulose are dissolved in deionized water and stirred to obtain a second active layer slurry; and
S2. upper and lower surfaces of the negative electrode current collector are coated by a double-layer coating method, where the first active layer and the second active layer both have the same surface density of 20 mg/cm²; and the coated upper and lower surfaces are dried, rolled, and cut to obtain the negative electrode sheet with a compacted density of 1.5 g/cm³.

### Embodiments 2-9

Embodiments 2-9 provide a series of negative electrode sheets, the preparation method and component content of which are the same as those in Embodiment 1. The difference lies in that the first negative electrode active material and the second negative electrode active material are different. See Table 1 for details.

**Table 1 Components of Embodiments 1-9**

| | Embodime nt 1 | Embodime nt 2 | Embodime nt 3 | Embodime nt 4 | Embodime nt 5 | Embodime nt 6 | Embodime nt 7 | Embodime nt 8 | Embodime nt 9 |
|---|---|---|---|---|---|---|---|---|---|
| First negative electrode active material | A | A | A | A | A | A | B | C | D |
| Second negative electrode active material | A | B | C | D | E | F | B | B | B |
| d1/d2 | 1.040 | 1.200 | 1.061 | 1.067 | 1.090 | 1.120 | 1.130 | 1.170 | 1.210 |

### Embodiment 10

Embodiment 10 provides a negative electrode sheet, and its preparation method is as follows:
S1. 94% of the first negative electrode active material B, 3% of conductive carbon black, 1.5% of styrene-butadiene rubber and 1.5% of sodium carboxymethyl cellulose are dissolved in deionized water and stirred to obtain a first active layer slurry; and 94% of the second electrode negative active material B, 3% of conductive carbon black, 1.5% of styrene-butadiene rubber and 1.5% of sodium carboxymethyl cellulose are dissolved in deionized water and stirred to obtain a second active layer slurry; and
S2. upper and lower surfaces of the current collector are coated with a double-layer coating method, where the first active layer and the second active layer both have the same surface density of 20 mg/cm²; and the coated upper and lower surfaces are dried, rolled, and cut to obtain the negative electrode sheet with a compacted density of 1.0g/cm³.

### Embodiment 11

Embodiment 11 provides a negative electrode piece, and its preparation method is as follows:
S1. 94% of the first negative electrode active material B, 3% of conductive carbon black, 1.5% of styrene-butadiene rubber and 1.5% of sodium carboxymethyl cellulose are dissolved in deionized water and stirred to obtain a first active layer slurry; and 94% of the second negative electrode active material B, 3% of conductive carbon black, 1.5% of styrene-butadiene rubber and 1.5% of sodium carboxymethyl cellulose are dissolved in deionized water and stirred to obtain a second active layer slurry; and
S2. upper and lower surfaces of the current collector are coated with a double-layer coating method, where the first active layer and the second active layer both have the same surface density of 20 mg/cm²; and the coated upper and lower surfaces are dried, rolled, and cut to obtain the negative electrode sheet with a compacted density of 1.1g/cm³.

### Embodiment 12

Embodiment 12 provides a negative electrode sheet, and its preparation method is as follows:
S1. 94% of the first negative electrode active material B, 3% of conductive carbon black, 1.5% of styrene-butadiene rubber and 1.5% of sodium carboxymethyl cellulose are dissolved in deionized water and stirred to obtain a first active layer slurry; and 94% of the second negative electrode active material B, 3% of conductive carbon black, 1.5% of styrene-butadiene rubber and 1.5% of sodium carboxymethyl cellulose are dissolved in deionized water and stirred to obtain a second active layer slurry; and
S2. upper and lower surfaces of the current collector are coated with a double-layer coating method, where the first active layer and the second active layer both have the same surface density of 20 mg/cm²; and the coated upper and lower surfaces are dried, rolled, and cut to obtain the negative electrode sheet with a compacted density of 1.7g/cm³.

### Embodiment 13

Embodiment 13 provides a negative electrode sheet, and its preparation method is as follows:
S1. 94% of the first negative electrode active material B, 3% of conductive carbon black, 1.5% of styrene-butadiene rubber and 1.5% of sodium carboxymethyl cellulose are dissolved in deionized water and stirred to obtain a first active layer slurry; and 94% of the second negative electrode active material B, 3% of conductive carbon black, 1.5% of styrene-butadiene rubber and 1.5% of sodium carboxymethyl cellulose are dissolved in deionized water and stirred to obtain a second active layer slurry; and
S2. upper and lower surfaces of the current collector are coated with a double-layer coating method, where the first active layer and the second active layer both have the same surface density of 20 mg/cm²; and the coated upper and lower surfaces are dried, rolled, and cut to obtain the negative electrode sheet with a compacted density of 1.9g/cm³.

### Embodiment 14

Embodiment 14 provides a negative electrode sheet, and its preparation method is as follows:
S1. 99.85% of the first negative electrode active material A, 0.05% of conductive carbon black, 0.05% of styrene-butadiene rubber and 0.05% of sodium carboxymethyl cellulose are dissolved in deionized water and stirred to obtain a first active layer slurry; 65% of the second negative electrode active material A, 15% of conductive carbon black, 15% of styrene-butadiene rubber and 5% of sodium carboxymethyl cellulose are dissolved in deionized water and stirred to obtain a second active layer slurry; and
S2. upper and lower surfaces of the current collector are coated with a double-layer coating method, where the first active layer and the second active layer both have the same surface density of 20 mg/cm²; and the coated upper and lower surfaces are dried, rolled, and cut to obtain the negative electrode sheet with a compacted density of 1.5g/cm³.

### Embodiment 15

Embodiment 15 provides a negative electrode sheet, and its preparation method is as follows:
S1. 65% of the first negative electrode active material A, 15% of conductive carbon black, 15% of styrene-butadiene rubber and 5% of sodium carboxymethylcellulose are dissolved in deionized water and stirred to obtain a first active layer slurry; and 99.85% of the second negative electrode active material A, 0.05% of conductive carbon black, 0.05% of styrene-butadiene rubber and 0.05% of sodium carboxymethyl cellulose are dissolved in deionized water and stirred to obtain a second active layer slurry; and
S2. upper and lower surfaces of the current collector are coated with a double-layer coating method, where the first active layer and the second active layer both have the same surface density of 20 mg/cm²; and the coated upper and lower surfaces are dried, rolled, and cut to obtain the negative electrode sheet with a compacted density of 1.5g/cm³.

### Comparative Embodiment 1

Comparative Embodiment 1 provides a negative electrode sheet, and its preparation method is as follows:
S1. 94% of the first negative electrode active material A, 3% of conductive carbon black, 1.5% of styrene-butadiene rubber and 1.5% of sodium carboxymethyl cellulose are dissolved in deionized water and stirred to obtain an active layer slurry; and
S2. upper and lower surfaces of the current collector are coated with a double-layer coating method, with a surface density of 20 mg/cm², and upper and lower dies both are made of the first active layer slurry; and the coated upper and lower surfaces are dried, rolled, and cut to obtain the negative electrode sheet with a compacted density of 1.5g/cm³.

### Comparative Embodiment 2

Comparative Embodiment 2 provides a negative electrode sheet, and its preparation method is as follows:
S1. 94% of the second negative electrode active material A, 3% of conductive carbon black, 1.5% of styrene-butadiene rubber and 1.5% of sodium carboxymethylcellulose are dissolved in deionized water and stirred to obtain a second active layer slurry; and
S2. upper and lower surfaces of the current collector are coated with a double-layer coating method, with a surface density of 20 mg/cm², and upper and lower dies both are made of the active layer slurry; and the coated upper and lower surfaces are dried, rolled, and cut to obtain the negative electrode sheet with a compacted density of 1.5g/cm³.

### Comparative Embodiment 3

Comparative Embodiment 3 provides a negative electrode sheet, and its preparation method is as follows:
S1. 94% of the second negative electrode active material B, 3% of conductive carbon black, 1.5% of styrene-butadiene rubber and 1.5% of sodium carboxymethylcellulose are dissolved in deionized water and stirred to obtain a first active layer slurry. material; and 94% of the first negative electrode active material B, 3% of conductive carbon black, 1.5% of styrene-butadiene rubber and 1.5% of sodium carboxymethyl cellulose are dissolved in deionized water and stirred to obtain a second active layer slurry; and
S2. upper and lower surfaces of the current collector are coated with a double-layer coating method, where the first active layer and the second active layer both have the same surface density of 20 mg/cm²; and the coated upper and lower surfaces are dried, rolled, and cut to obtain the negative electrode sheet with a compacted density of 1.5g/cm³.

### Performance Testing

Preparation of sodium ion batteries:
(1) Electrolyte: 1M NaPF₆ is dissolved in ethylene carbonate (EC): diethyl carbonate (DEC) = 3:7
(2) Diaphragm: PP film;
(3) Components of the positive electrode sheet: a positive electrode material (Na₃V₂(PO₄)₂F₃, accounting for 96%), a conductive agent (SP, accounting for 3%), and a binder (PVDF, accounting for 1%) are evenly mixed in N-methylpyrrolidone to obtain a positive electrode sheet slurry. The positive electrode sheet slurry is coated onto the positive electrode current collector, and the coated positive electrode current collector is dried, rolled and cut to obtain the positive electrode sheet.
(4) Assembly of sodium-ion batteries

The negative electrode sheets, positive electrode sheets, diaphragms, structural parts and the like prepared in Embodiments 1 to 15 and Comparative Embodiments 1 to 3 are respectively assembled and wound with the same number of layers, and then the sodium ion batteries are obtained after liquid injection, formation, aging, and sealing and other processes.

The NEWARE power battery testing system is used to conduct a 0.5A current charge and discharge test on the obtained sodium ion batteries, and the battery capacity is obtained. The data is recorded in Table 2.

Initial Coulomb Efficiency (ICE): ICE = first charge capacity/first discharge capacity * 100%; and the data is recorded in Table 2.

80% capacity retention rate: charge and discharge with a current of 0.5C, and the number of cycles when cycling to 80% capacity retention rate (80% SOH) at a room temperature are recorded.

**Table 2 Data of Embodiments and Comparative Embodiments**

| | Capacity/Ah | Initial | Number of cycles when |
|---|---|---|---|
| | | Coulomb efficiency/% | cycling to 80% SOH |
| Embodiment 1 | 3.19 | 90% | 1850 |
| Embodiment 2 | 2.45 | 92% | 2400 |
| Embodiment 3 | 3.60 | 91% | 2000 |
| Embodiment 4 | 3.59 | 91% | 2100 |
| Embodiment 5 | 3.58 | 92% | 2250 |
| Embodiment 6 | 3.55 | 92% | 2280 |
| Embodiment 7 | 2.33 | 93% | 2600 |
| Embodiment 8 | 2.36 | 93% | 2450 |
| Embodiment 9 | 3.45 | 89% | 1300 |
| Embodiment 10 | 2.34 | 88% | 1800 |
| Embodiment 11 | 2.34 | 89% | 2000 |
| Embodiment 12 | 2.32 | 93% | 2500 |
| Embodiment 13 | 2.30 | 89% | 1300 |
| Embodiment 14 | 3.26 | 90% | 1800 |
| Embodiment 15 | 2.31 | 90% | 1800 |
| Comparative Embodiment 1 | 3.73 | 82% | 820 |
| Comparative Embodiment 2 | 2.15 | 93% | 3000 |
| Comparative Embodiment 3 | 2.28 | 87% | 920 |

It could be seen from test results in Table 1 that Comparative Embodiment 1 has the highest capacity, but its coulombic efficiency and cycle life are not up to standard. It could be seen that the single use of hard carbon doped with a large amount of elements could not achieve ideal performance. In Comparative Embodiment 2, although its doping amount of mixed elements is smaller and its cycle performance and first efficiency are higher, but the capacity is not up to standard.

As in Embodiments 1 to 6, the first active layer remained unchanged, and a width of the (002) crystal planes is adjusted by adjusting the heteroatom content of the second active layer. Within the limit range of the second active layer (0.332 nm≤d2≤0.383 nm (3.32 Å≤d2≤3.83 Å)), the battery capacity and initial efficiency met the standards. In addition, as in Embodiments 1 and 3-6, the effects of various mixed elements are further compared. In Embodiments 3 to 6, based on Embodiment 1, the doping amounts of boron, phosphorus, sulfur, and nitrogen are each reduced by 0.5% to determine the impact of each element on battery performance. Since the difference in capacity between the groups of Embodiments 3-6 is basically not large (<0.05), obviously, the reduction of nitrogen and sulfur elements is more helpful to improve the initial efficiency and cycle stability.

In Embodiments 2, 7 to 9, the second active layer remained unchanged and the first active layer is changed. Among them, the design parameters of the three Embodiments 2, 7 and 8 are all within the specification range in the claims, and their performance is relatively excellent. However, the first active layer of Embodiment 9 adopts hard carbon with a higher (002) crystal planes width. It has reached the limit of hard carbon materials, therefore its layered structure is prone to collapse and the cycle accelerated attenuation.

For a comparison of the impact of compaction density on battery performance, see Embodiments 7 and 10-13. Under a reasonable compaction density, the battery performance is better. However, a too low compacted density, larger pores and many side reactions are not conducive to Coulombic efficiency. Therefore, the initial efficiency of Embodiment 10 is low. If the density is too high, the risk of material being damaged is great. When the compaction density of 1.9 is reached, the battery performance decreased.

Compared with Embodiment 1, Embodiment 14 increased the proportion of active materials in the first active layer, the capacity is improved to a certain extent, and there is no significant difference in coulombic efficiency and cycle stability. Thus, reducing the proportion of inactive substances is a feasible idea. Compared with Embodiment 1, Embodiment 15 reduces the proportion of active materials in the first active layer, and the capacity is significantly reduced. From the perspective of increasing capacity, reducing the proportion of active materials has no obvious advantage.

In comparative Embodiment 3 and Embodiment 7, the positions of the active materials are exchanged, resulting in Comparative Embodiment 3 having d1/d2<1. Obviously, the capacity, cycle stability and initial efficiency of Comparative Embodiment 3 are not ideal.

The above has been described in detail with reference to the embodiments of the present invention, but the present invention is not limited to the above-mentioned embodiments.

## Claims

1. A negative electrode sheet, comprising a negative electrode current collector (3) and a negative electrode active layer disposed on at least one side of the negative electrode current collector (3), wherein the negative electrode active layer comprises a first active layer (1) and a second active layer (2), and the first active layer (1) is located between the second active layer (2) and the negative electrode current collector (3);
wherein the first active layer (1) comprises a first negative electrode active material, and the second active layer (2) comprises a second negative electrode active material;
an interplanar spacing d1 of (002) crystal planes of the first negative electrode active material is greater than an interplanar spacing d2 of (002) crystal planes of the second negative electrode active material, and d1 and d2 satisfy: (i) d1/d2≤1.2; wherein the interplanar spacing is **characterized by** a transmission electron microscope;
the first negative electrode active material and the second negative electrode active material each independently comprise heteroatoms, and the heteroatoms include at least two of nitrogen, oxygen, sulfur or boron;
a content of the heteroatoms in the first negative electrode active material is greater than that in the second negative electrode active material; and
the first negative electrode active material and the second negative electrode active material each include at least one of hard carbon, soft carbon, and mesocarbon microspheres.

2. The negative electrode sheet according to claim 1, wherein the interplanar spacing d1 of (002) crystal planes of the first negative electrode active material and the interplanar spacing d2 of (002) crystal planes of the second negative electrode active material further satisfy at least one of the following conditions: $0.377 nm \leq d 1 \leq 0.398 nm \left(3.77 Å\leq d1\leq 3.98 Å\right) ;$
and $0.332 nm ⩽ d 2 ⩽ 0.382 nm \left(3.32 Å\leq d2\leq 3.83 Å\right) .$

3. The negative electrode sheet according to claim 1, wherein the first active layer (1) further comprises a first conductive agent, a first binder and a first dispersant, and the second active layer (2) further comprises a second conductive agent, a second binder and a second dispersant.

4. The negative electrode sheet according to claim 3, wherein the first conductive agent and the second conductive agent each independently comprise at least one of conductive carbon black, acetylene black, Ketjen black, conductive graphite, conductive carbon fiber, carbon nanotubes, metal powder or carbon fiber;
and/or, the first binder and the second binder each independently comprise at least one of polyvinylidene fluoride, polyvinyl alcohol, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene monomer (EPDM), styrene-butadiene rubber and fluorine rubber;
and/or, the first dispersant and the second dispersant each independently comprise at least one of sodium carboxymethylcellulose and lithium carboxymethylcellulose.

5. A secondary battery, comprising a positive electrode sheet, an electrolyte, a diaphragm, and the negative electrode sheet according to any one of claims 1 to 4.

6. An electrical device, comprising the secondary battery according to claim 5.

## Patentansprüche

1. Eine Negativelektrodenfolie, umfassend einen Negativelektrodenstromkollektor (3) und eine Negativelektrodenaktivschicht, die auf mindestens einer Seite des Negativelektrodenstromkollektors (3) angeordnet ist, wobei die Negativelektrodenaktivschicht eine erste Aktivschicht (1) und eine zweite Aktivschicht (2) umfasst und die erste Aktivschicht (1) zwischen der zweiten Aktivschicht (2) und dem Negativelektrodenstromkollektor (3) angeordnet ist;
wobei die erste aktive Schicht (1) ein erstes aktives Material der negativen Elektrode umfasst und die zweite aktive Schicht (2) ein zweites aktives Material der negativen Elektrode umfasst;
ein Interplanarabstand d1 der (002)-Kristallebenen des ersten aktiven Materials der negativen Elektrode größer ist als ein Interplanarabstand d2 der (002)-Kristallebenen des zweiten aktiven Materials der negativen Elektrode, und d1 und d2 die folgende Bedingung erfüllen: (i) d1/d2 ≤ 1,2; wobei der Interplanarabstand mittels eines Transmissionselektronenmikroskops bestimmt wird;
das erste aktive Material der negativen Elektrode und das zweite aktive Material der negativen Elektrode umfassen jeweils unabhängig voneinander Heteroatome, und die Heteroatome umfassen mindestens zwei der Elemente Stickstoff, Sauerstoff, Schwefel oder Bor;
der Gehalt an Heteroatomen im ersten aktiven Material der negativen Elektrode ist größer als der im zweiten aktiven Material der negativen Elektrode; und
das erste aktive Material der negativen Elektrode und das zweite aktive Material der negativen Elektrode umfassen jeweils mindestens eines aus Hartkohlenstoff, Weichkohlenstoff und Mesokohlenstoff-Mikrokugeln.

2. Negativelektrodenfolie nach Anspruch 1, wobei der Interplanarabstand d1 der (002)-Kristallebenen des ersten aktiven Materials der Negativelektrode und der Interplanarabstand d2 der (002)-Kristallebenen des zweiten aktiven Materials der Negativelektrode ferner mindestens eine der folgenden Bedingungen erfüllen: $0 , 377 nm \leq d 1 \leq 0,398 nm \left(3,77 Å\leq d1\leq 3,98 Å\right) ;$ und $0 , 332 nm \leq d 2 \leq 0,383 nm \left(3,32 Å\leq d2\leq 3,83 Å\right) .$

3. Negativelektrodenfolie nach Anspruch 1, wobei die erste aktive Schicht (1) ferner ein erstes Leitmittel, ein erstes Bindemittel und ein erstes Dispergiermittel umfasst und die zweite aktive Schicht (2) ferner ein zweites Leitmittel, ein zweites Bindemittel und ein zweites Dispergiermittel umfasst.

4. Negativelektrodenfolie nach Anspruch 3, wobei das erste Leitmittel und das zweite Leitmittel jeweils unabhängig voneinander mindestens eines der folgenden Elemente umfassen: leitfähigen Ruß, Acetylenruß, Ketjen-Ruß, leitfähigen Graphit, leitfähige Kohlenstofffasern, Kohlenstoffnanoröhren, Metall
und/oder das erste Bindemittel und das zweite Bindemittel jeweils unabhängig voneinander mindestens eines der folgenden Materialien umfassen: Polyvinylidenfluorid, Polyvinylalkohol, Stärke, Hydroxypropylcellulose, regenerierte Cellulose, Polyvinylpyrrolidon, Tetrafluorethylen, Polyethylen, Polypropylen, Ethylen-Propylen-Dien-Terpolymer, sulfoniertes Ethylen-Propylen-Dien-Monomer (EPDM), Styrol-Butadien-Kautschuk und Fluorkautschuk;
und/oder das erste Dispergiermittel und das zweite Dispergiermittel jeweils unabhängig voneinander mindestens eines der folgenden enthalten: Natriumcarboxymethylcellulose und Lithiumcarboxymethylcellulose.

5. Sekundärbatterie, umfassend eine positive Elektrodenfolie, einen Elektrolyten, ein Separator und die negative Elektrodenfolie gemäß einem der Ansprüche 1 bis 4.

6. Ein elektrisches Gerät, umfassend die Sekundärbatterie gemäß Anspruch 5.

## Revendications

1. Feuille d'électrode négative, comprenant un collecteur de courant d'électrode négative (3) et une couche active d'électrode négative disposée sur au moins un côté du collecteur de courant d'électrode négative (3), dans laquelle la couche active d'électrode négative comprend une première couche active (1) et une deuxième couche active (2), et la première couche active (1) est située entre la deuxième couche active (2) et le collecteur de courant d'électrode négative (3) ;
dans laquelle la première couche active (1) comprend un premier matériau actif d'électrode négative, et la deuxième couche active (2) comprend un deuxième matériau actif d'électrode négative ;
un espacement interplanaire d1 des plans cristallins (002) du premier matériau actif d'électrode négative est supérieur à un espacement interplanaire d2 des plans cristallins (002) du deuxième matériau actif d'électrode négative, et d1 et d2 satisfont à la relation : (i) d1/d2 ≤ 1,2 ; l'espacement interplanaire étant **caractérisé par** un microscope électronique à transmission ;
le premier matériau actif d'électrode négative et le deuxième matériau actif d'électrode négative comprennent chacun indépendamment des hétéroatomes, et les hétéroatomes comprennent au moins deux parmi l'azote, l'oxygène, le soufre ou le bore ;
la teneur en hétéroatomes dans le premier matériau actif de l'électrode négative est supérieure à celle dans le deuxième matériau actif de l'électrode négative ; et
le premier matériau actif de l'électrode négative et le deuxième matériau actif de l'électrode négative comprennent chacun au moins l'un des éléments suivants : du carbone dur, du carbone tendre et des microsphères de mésocarbon.

2. Feuille d'électrode négative selon la revendication 1, dans laquelle l'espacement interplanaire d1 des plans cristallins (002) de la première matière active d'électrode négative et l'espacement interplanaire d2 des plans cristallins (002) de la deuxième matière active d'électrode négative satisfont en outre à au moins l'une des conditions suivantes : $0 , 377 nm \leq d 1 \leq 0,398 nm \left(3,77 Å\leq d1\leq 3,98 Å\right) ;$ et $0 , 332 nm \leq d 2 \leq 0,383 nm \left(3,32 Å\leq d2\leq 3,83 Å\right) .$

3. Feuille d'électrode négative selon la revendication 1, dans laquelle la première couche active (1) comprend en outre un premier agent conducteur, un premier liant et un premier agent dispersant, et la deuxième couche active (2) comprend en outre un deuxième agent conducteur, un deuxième liant et un deuxième agent dispersant.

4. Feuille d'électrode négative selon la revendication 3, dans laquelle le premier agent conducteur et le deuxième agent conducteur comprennent chacun indépendamment au moins l'un des éléments suivants : noir de carbone conducteur, noir d'acétylène, noir de Ketjen, graphite conducteur, fibre de carbone conductrice, nanotubes de carbone, métal
et/ou, le premier liant et le deuxième liant comprennent chacun indépendamment au moins l'un des composés suivants : le polyfluorure de vinylidène, de l'alcool polyvinylique, de l'amidon, de l'hydroxypropylcellulose, de la cellulose régénérée, de la polyvinylpyrrolidone, du tétrafluoroéthylène, du polyéthylène, du polypropylène, d'un terpolymère d'éthylène-propylène-diène, d'un monomère d'éthylène-propylène-diène sulfoné (EPDM), du caoutchouc styrène-butadiène et du caoutchouc fluoré ;
et/ou, le premier agent dispersant et le deuxième agent dispersant comprennent chacun indépendamment au moins l'un des composés suivants : la carboxyméthylcellulose de sodium et la carboxyméthylcellulose de lithium.

5. Batterie secondaire, comprenant une feuille d'électrode positive, un électrolyte, un séparateur et la feuille d'électrode négative selon l'une quelconque des revendications 1 à 4.

6. Dispositif électrique comprenant la batterie rechargeable selon la revendication 5.
